# EUROPÄISCHE PATENTSCHRIFT

(11) **EP 2 812 991 B1**
(45) Veröffentlichungstag und Bekanntmachung des Hinweises auf die Patenterteilung: **25.10.2017**
(21) Anmeldenummer: 13707539.6
(22) Anmeldetag: 04.02.2013
(51) Int. Cl.: H02N 2/00, H02N 2/02, H02N 2/10

(54) **ULTRASCHALLAKTOR**
ULTRASONIC ACTUATOR
ACTIONNEUR ULTRASONORE

(30) Priorität: 08.02.2012 DE 102012201863
(43) Veröffentlichungstag der Anmeldung: 17.12.2014
(73) Patentinhaber: Physik Instrumente (PI) GmbH & Co. KG, 76228 Karlsruhe (DE)
(72) Erfinder: WISCHNEWSKIY, Wladimir, 14712 Rathenow (DE); WISCHNEWSKI, Alexej, 76744 Wörth (DE)
(74) Vertreter: Schatt, Markus F.
(86) Internationale Anmeldenummer: PCT/DE2013/100037
(87) Internationale Veröffentlichungsnummer: WO 2013/117189

(56) Entgegenhaltungen:
- WO-A1-01/13505
- DE-C1- 19 636 827
- FR-A1- 2 819 650

## Beschreibung

Die Erfindung bezieht sich auf einen Ultraschallaktor aus piezoelektrischer Keramik und einem an dem Ultraschallaktor angeordneten Friktionselement. Zudem bezieht sich die Erfindung auf einen Ultraschallmotor mit einem solchen Ultraschallaktor.

Aus den Druckschriften DE 196 36 821 C1, US 6,979,934 B1, US 6,765,335 B2 und EP 2 153 476 sind beispielsweise Ultraschallmotoren bekannt, bei welchen der Ultraschallaktor an diesem angeordnete bzw. befestigte Friktionselemente aufweist. Bei diesen Ultraschallmotoren besteht der Ultraschallaktor komplett aus einer Blei-Zirkonat-Titanat (PZT)-Keramik. Die Friktionselemente sind mittels eines organischen Klebers auf Epoxidharzbasis mit dem polararisierten Ultraschallaktor verbunden. Weiterhin sind aus den Druckschriften DE 10 2008 026 429 A1 und DE 195 22 072 C1 Ultraschallaktoren bekannt, welche die Verwendung von Monokristallen als Werkstoff für den Friktionskontakt zeigen, während aus den Druckschriften DE 199 26 010 A1 und JP 11261127 A die Verwendung von Monokristallen als Werkstoff für den Oszillator bekannt ist. Die Druckschrift WO 01 / 13505 A1 beschreibt die Verwendung einer Dämpfungsschicht zwischen dem Körper eines getriebenen Elementes und seiner Reibfläche. Die Druckschrift FR 2 819 650 A1 beschreibt eine Segmentierung einer Reibfläche zur Reduktion von thermisch bedingten mechanischen Spannungen.

Die maximale Arbeitstemperatur der Ultraschallaktoren wird durch den Curiepunkt der Piezokeramik begrenzt, der für PZT-Keramiken bei über 300°C liegt. Gleichzeitig wird die Festigkeit des organischen Klebers auf Epoxidharzbasis durch die Aushärtetemperatur des Klebers bestimmt. Diese kann bei speziellen Klebern bis zu 250°C betragen.

Im Ultraschallmotor überträgt das Friktionselement die mechanische Leistung des Ultraschallaktors auf das anzutreibende Element. Deshalb wird die gesamte an das anzutreibende Element zu übertragende mechanische Leistung über die Kleberschicht, die das Friktionselement mit dem Ultraschallaktor verbindet, übertragen. Durch die auf die Kleberschicht einwirkenden Ultraschallschwingungen erwärmt sich diese.

Wenn die Temperatur der Kleberschicht die Aushärtetemperatur des Klebers überschreitet, führt dies in der Regel zu einer Zersetzung des Klebers mit einhergehenden gravierenden Eigenschaftsänderungen, so dass sich das Friktionselement in der Folge vom Ultraschallaktor lost. Dadurch wird der Ultraschallaktor lastlos, weshalb sich sein Widerstand um etliche Zehnerpotenzen verringert. Dies führt zu einer Zerstörung des Ultraschallaktors und letztlich zu einem Totalausfall des Ultraschallmotors.

Der Temperaturanstieg in der Kleberschicht ist proportional zu seiner Dicke. Deshalb ist es vorteilhaft, wenn die Dicke der Kleberschicht gering ist. Üblich sind Dicken der Kleberschicht zwischen 10 und 15 Mikrometer.

Gemäß internem Stand der Technik der Anmelderin werden beim Verkleben des Friktionselementes mit dem piezoelektrischen Aktor des Ultraschallmotors beide bis auf die Aushärtetemperatur des Klebers erhitzt. Danach erfolgt eine Abkühlung beider Elemente. Aufgrund großer Unterschiede der Temperaturausdehnungskoeffizienten von Ultraschallaktor und Friktionselement bilden sich beim Abkühlen im Bereich der Kleberschicht große mechanische Anfangsspannungen aus. Diese mechanischen Anfangsspannungen werden durch den sich üblicherweise beim Betrieb des Ultraschallaktors ausbildenden Temperaturanstieg verringert oder kompensiert; die mechanischen Spannungen sind jedoch umso höher, je weiter die Aushärtetemperatur des Klebers von der mittleren Arbeitstemperatur des Motors entfernt ist.

In der Praxis ist es nahezu unmöglich, die Aushärtetemperatur des Klebers höher als 100°C zu wählen. Bei einer höheren Temperatur wären die mechanischen Anfangsspannungen äußerst hoch. Beim Einschalten des Motors addieren sich die mechanischen Anfangsspannungen und die mechanischen Spannungen aufgrund des Friktionskontakts von Friktionselement und anzutreibendem Element, wodurch mechanische Summenspannungen entstünden, deren Amplitude so groß wäre, dass das Piezoelement zerspringen oder die Klebeschicht direkt zerstört würde.

Auf der anderen Seite ist es auch nicht praktikabel, zur Kompensation des Unterschiedes der Temperaturausdehnung von Piezokeramik und Friktionselement die Dicke der Klebeschicht zu erhöhen, da - wie zuvor bereits erwähnt - die Erwärmung der Klebeschicht proportional zu seiner Dicke ist.

Somit ist bei den aus dem internen Stand der Technik der Anmelderin bekannten Ultraschallaktoren bzw. den damit gebildeten Ultraschallmotoren die maximale Arbeitstemperatur deutlich eingeengt bzw. begrenzt.

Aufgabe der Erfindung ist es daher, einen Ultraschallaktor bzw. einen damit ausgerüsteten Ultraschallmotor mit einem vergrößerten Arbeitstemperaturbereich bereitzustellen.

Diese Aufgabe wird gelöst durch einen Ultraschallaktor nach Anspruch 1 bzw. durch einen Ultraschallmotor nach Anspruch 11. Vorteilhafte Weiterbildungen des erfindungsgemäßen Ultraschallaktors bzw. der erfindungsgemäßen Ultraschallmotors sind Gegenstand der Unteransprüche.

Bei dem erfindungsgemäßen Ultraschallaktor ist das piezokeramische Material polarisiert, so dass eine Vielzahl von parallel zueinander verlaufenden Polarisationsvektoren p angegeben werden können, die in ihrer Gesamtheit eine Polarisationsrichtung definieren, welche durch die Polarisationsachse P beschreibbar ist. In Bezug auf die Polarisationsachse P weist das piezokeramische Material des Ultraschallaktors zwei unterschiedliche Temperaturausdehnungskoeffizienten auf, und zwar einen Temperaturausdehnungskoeffizienten *α*_{∥} parallel zur Polarisationsachse P, und einen sich hiervon unterscheidenden Temperaturausdehnungskoeffizienten *α*_{⊥} senkrecht zur Polarisationsachse P, wobei *α*_{∥} kleiner als *α*_{⊥} ist.

Die Folge des Unterschieds der Temperaturausdehnungskoeffizienten *α*_{∥} und *α*_{⊥} ist, dass sich bei einer Erwärmung der Ultraschallaktor parallel zur Polarisationsachse P weniger stark ausdehnt als senkrecht dazu.

An dem Ultraschallaktor ist wenigstens ein Friktionselement angeordnet, wobei das Friktionselement aus einem anisotropen Monokristall mit entlang der drei Kristallachsen a, b, und c unterschiedlichen Temperaturausdehnungskoeffizienten besteht. Hierbei ist der Temperaturausdehnungskoeffizient entlang einer ersten der drei Kristallachsen am geringsten und der Temperaturausdehnungskoeffizient entlang einer zweiten der drei Kristallachsen am größten. Das Friktionselement des erfindungsgemäßen Ultraschallaktors ist in Bezug auf diesen so ausgerichtet, dass die erste Kristallachse parallel zur Polarisationsachse P des Ultraschallaktors angeordnet und die zweite Kristallachse senkrecht zur Polarisationsachse P des Ultraschallaktors angeordnet ist. Für das Friktionselement kann hierbei eine Polarisationsachse P_{z} angegeben werden, bei welcher das Friktionselement symmetrisch zu dieser liegt und welche für das Friktionselement die zentrale Polarisationsachse darstellt.

Durch die zuvor beschriebene Ausrichtung des Friktionselements zum Ultraschallaktor fallen die Richtungen minimaler und maximaler Ausdehnung zusammen und es findet eine Annäherung der entsprechenden Temperaturausdehnungskoeffizienten statt, so dass die durch thermische Einwirkung hervorgerufenen Spannungen im Grenz oder Übergangsbereich zwischen Friktionselement und Ultraschallaktor minimiert sind.

Es kann vorteilhaft sein, dass das Monokristall des Friktionselements eine rhombische Kristallstruktur aufweist und vorzugsweise aus Yttriumaluminat (YAIO₃), Chrysoberyll (BeAl₂O₄) oder Topas Al₂SiO₄(F,OH)₂ besteht.

Hierbei kann es vorteilhaft sein, dass die Kristallachse b des Friktionselements parallel zur Polarisationsachse P des Ultraschallaktors, und die Kristallachse c des Friktionselements senkrecht zur Oberfläche des Ultraschallaktors, an der das Friktionselement angeordnet ist, ausgerichtet ist.

Es kann zudem vorteilhaft sein, dass das Friktionselement aus Lithiumtriborat (LiB₃O₅) besteht. In diesem Fall kann es von Vorteil sein, dass die Kristallachse b des Friktionselements parallel zur Polarisationsachse P des Ultraschallaktors und die Kristallachse c des Friktionselements senkrecht zur Polarisationsachse des Ultraschallaktors ausgerichtet ist, während die Kristallachse a senkrecht zur Oberfläche des Ultraschallaktors, an der das Friktionselement angeordnet ist, ausgerichtet ist.

Weiterhin kann es vorteilhaft sein, dass das Monokristall des Friktionselements eine hexagonale Kristallstruktur aufweist und vorzugsweise aus Korund, Rubin, Saphir (Al₂O₃) oder Siliziumkarbid (SiC), besteht. In diesem Fall kann es günstig sein, dass die Kristallachse c des Friktionselements senkrecht zur Polarisationsachse P des Ultraschallaktors und die aus den zwei anderen Kristallachsen a und b gebildete Ebene senkrecht zur Oberfläche des Ultraschallaktors, an welcher das Friktionselement angeordnet ist, ausgerichtet ist.

Es kann von Vorteil sein, dass das Friktionselement mit einer dünnen harten abriebfesten Außenschicht, vorzugsweise bestehend aus isotroper Keramik, Sitall, Glas oder mit harten Metallteilchen gefülltem Glas versehen ist.

Hierbei kann es sich als günstig erweisen, dass die abriebfeste Außenschicht des Friktionselementes eine monolithische Struktur, oder eine Struktur in Form gerader oder konzentrischer oder spiralförmiger Streifen, oder eine Netzstruktur oder eine Struktur in Form eines Feldes von Punkten quadratischer oder anderer Form aufweist.

Außerdem kann es von Vorteil sein, dass das Friktionselement mittels eines organischen Klebers oder eines Niedrigtemperaturglases mit dem Ultraschallaktor verbunden ist.

Die Erfindung betrifft zudem einen Ultraschallmotor mit einem Ultraschallaktor nach einem der vorangegangenen Ansprüche und einem durch den Ultraschallaktor anzutreibenden Element.

Hierbei kann es sich als günstig erweisen, dass das anzutreibende Element eine Friktionsschiene aufweist, mit welcher das Friktionselement des Ultraschallaktors in Wirkverbindung steht.

Dabei kann es sich als günstig erweisen, dass die Friktionsschiene aus einem synthetischen Monokristall aus Kohlenstoff kubischer Kristallstruktur besteht, wobei die Kristallachse c des Monokristalls senkrecht oder parallel zur Oberfläche der Friktionsschiene angeordnet ist.

Weiterhin kann es sich als günstig erweisen, dass die Friktionsschiene aus einem Kohlenstoffmonokristall kubischer Kristallstruktur, vorzugsweise aus Zirkonoxid (ZrO₂) Spinell (MgAl₂O₄), Yttrium-Aluminium-Granat (Y₃Al₅O₁₂) oder Bornitrid (*β*-BN), besteht, wobei die Kristallachse a oder die Kristallachse b oder die Kristallachse c des Monokristalls senkrecht zur Oberfläche der Friktionsschiene ausgerichtet ist.

Darüber hinaus kann es sich als günstig erweisen, dass die Friktionsschiene aus einem Monokristall hexagonaler Kristallstruktur, vorzugsweise aus Korund, Rubin oder Saphir (Al₂O₃), besteht, wobei die Kristallachse c des Monokristalls senkrecht oder parallel zur Oberfläche der Friktionsschiene ausgerichtet ist.

Weitere vorteilhafte Weiterbildungen der Erfindung ergeben sich durch Kombinationen der in den Ansprüchen, in der Beschreibung und in den Zeichnungen offenbarten Merkmale.

Kurze Beschreibung der Zeichnungen.
Fig. 1: Darstellungen 1 und 2: Ausführungsformen eines Ultraschallmotors.
Fig. 2: Darstellungen 22 bis 28: Unterschiedliche Ausführungsformen eines plattenförmigen Ultraschallaktors.
Fig. 3: Darstellungen 30 bis 37: Unterschiedliche Ausführungsformen eines Friktionselements.
Fig. 4: Darstellungen 38 und 39: Ausführungsformen eines Ultraschallmotors; Darstellungen 41 bis 43: Einzelheiten der Ultraschallmotoren gemäß Darstellungen 38 und 39; Darstellungen 44 und 45: weitere Ausführungsformen des Friktionselements.
Fig. 5: Darstellungen 46 und 47: Ausführungsformen eines Ultraschallmotors mit hohlzylindrischem Ultraschallaktor; Darstellungen 48 und 49: Einzelheiten der Ultraschallmotoren gemäß Darstellungen 46 und 47.
Fig. 6: Darstellung 50: Ausführungsform eines Ultraschallmotors mit Ultraschallaktor in Form eines Teilhohlzylinders; Darstellungen 51 und 52: Einzelheiten des Ultraschallmotors gemäß Darstellung 50.
Fig. 7: Darstellung 54: Weitere Ausführungsform eines Ultraschallmotors mit Ultraschallaktor in Form eines Teilhohlzylinders; Darstellungen 55 und 56: Einzelheiten des Ultraschallmotors gemäß Darstellung 54.
Fig. 8: Darstellungen 57 und 58: Ausführungsform eines Ultraschallmotors mit Ultraschallaktor in Form eines Rings bzw. eines Teilrings; Darstellung 59: Friktionselement der Ultraschallmotoren gemäß Fig. 57 und 58.
Fig. 9: Darstellung 60: Ausführungsform eines Ultraschallmotors mit scheibenförmigem Ultraschallaktor; Darstellungen 61 und 62: Einzelheiten des Ultraschallmotors gemäß Darstellung 60.
Fig. 10: Darstellung 64: Weitere Ausführungsform eines Ultraschallmotors mit scheibenförmigem Ultraschallaktor; Darstellungen 65 bis 67: Einzelheiten des Ultraschallmotors gemäß Darstellung 64.
Fig. 11: Darstellung 68: Weitere Ausführungsform eines Ultraschallmotors mit scheibenförmigem Ultraschallaktor; Darstellung 69: Ultraschallaktor des Ultraschallmotors gemäß Darstellung 68; Darstellung 70: weitere Ausführungsform eines Ultraschallaktors für den Ultraschallmotor gemäß Darstellung 68; Darstellung 71: Friktionselement der Ultraschallaktoren nach den Darstellungen 69 und 70.
Fig. 12: Darstellung 72: Ausführungsform eines Ultraschallmotors; Darstellung 73: Friktionselement des Ultraschallmotors nach Darstellung 72.
Fig. 13: Schematische Darstellung der temperaturinduzierten Dimensionsänderungen eines Ultraschallaktor.
Fig. 14: Darstellungen 75 bis 84: Unterschiedliche Ausführungsformen eines Friktionselements aus Yttriumaluminat; Darstellung 85: Abschnitt eines Ultraschallaktors mit Oberfläche zur Anbringung eines Friktionselements nach den Darstellungen 75 bis 84.
Fig. 15: Darstellungen 86 bis 88: Unterschiedliche Ausführungsformen eines Friktionselements aus Yttriumaluminat; Darstellung 89: Abschnitt eines Ultraschallaktors mit Oberfläche zur Anbringung eines Friktionselements nach den Darstellungen 86 bis 88.
Fig. 16: Darstellungen 90 und 91: Unterschiedliche Ausführungsformen eines Friktionselements aus Yttriumaluminat; Darstellung 92: Abschnitt eines Ultraschallaktors mit Oberfläche zur Anbringung eines Friktionselements nach den Darstellungen 90 und 91.
Fig. 17: Darstellungen 93 bis 96: Ausführungsformen eines Friktionselements aus Lithiumtriborat; Darstellung 97: Abschnitt eines Ultraschallaktors mit Oberfläche zur Anbringung eines Friktionselements nach den Darstellungen 93 bis 96.
Fig. 18: Darstellungen 98 bis 100: Unterschiedliche Ausrichtungen eines Friktionselements aus Yttriumaluminat zum Ultraschallaktor.
Fig. 19: Darstellung 101: Elementarzelle eines Monokristalls hexagonaler Kristallstruktur; Darstellungen 102 bis 109: Ausführungsformen eines Friktionselements aus einem Monokristall hexagonaler Kristallstruktur; Darstellung 110: Abschnitt eines Ultraschallaktors mit Oberfläche zur Anbringung eines Friktionselements nach den Darstellungen 102 bis 109.
Fig. 20: Darstellungen 111 bis 113: Unterschiedliche Ausführungsformen eines Friktionselements aus einem Monokristall hexagonaler Kristallstruktur; Darstellung 114: Abschnitt eines Ultraschallaktors mit Oberfläche zur Anbringung eines Friktionselements nach den Darstellungen 111 bis 113.
Fig. 21: Darstellungen 115 und 116: Unterschiedliche Ausführungsformen eines Friktionselements aus einem Monokristall hexagonaler Kristallstruktur; Darstellung 117: Abschnitt eines Ultraschallaktors mit Oberfläche zur Anbringung eines Friktionselements nach den Darstellungen 115 und 116.
Fig. 22: Darstellungen 118 bis 123: Unterschiedliche Ausführungsformen von mit einer abriebfesten Außenschicht versehenen Friktionselementen.
Fig. 23: Darstellungen 125 bis 129: Unterschiedliche Ausführungsformen einer am anzutreibenden Element angeordneten bzw. anordnungsbaren Friktionsschiene.
Fig. 24: Darstellung 130: Elementarzelle eines Monokristalls mit kubischer Kristallstruktur; Darstellungen 131 bis 136: Unterschiedliche Ausführungsformen einer Friktionsschiene aus Monokristallen kubischer Kristallstruktur.
Fig. 25: Darstellung 138: Elementarzelle eines Monokristalls mit hexagonaler Kristallstruktur; Darstellungen 139 bis 144: Unterschiedliche Ausführungsformen einer Friktionsschiene aus Monokristallen hexagonaler Kristallstruktur.
Fig. 26: Ausführungsform eines anzutreibenden Elements des Ultraschallmotors.

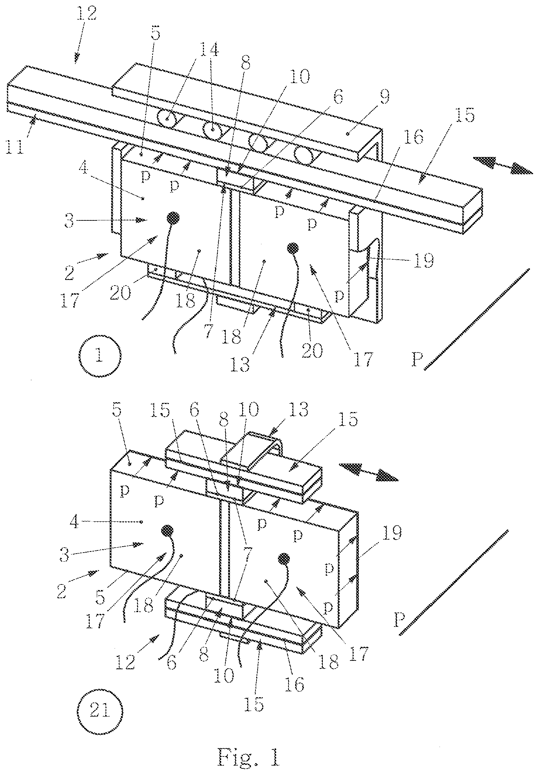

Darstellung 1 von Fig. 1 zeigt eine mögliche Ausführungsform eines Ultraschallmotors mit einem erfindungsgemäßen Ultraschallaktor. Der Ultraschallaktor 2 aus piezoelektrischer Keramik hat hierbei die Form einer Platte 4. Ein Kleber 7 verbindet die Verbindungsfläche 6 des Friktionselements 8 mit der Arbeitsfläche 5 des Piezoelements 3.

Der Ultraschallaktor 2 ist in einem Gehäuse 9 angeordnet. Die Friktionsoberfläche 10 des Friktionselements 8 ist mit einem Federelement 13 an die Friktionsschiene 11 des anzutreibenden Elements 12 in Form eines rechteckigen Stabs angepresst. Das anzutreibende Element 12 ist mittels Lagerelementen 14 beweglich gegenüber dem Gehäuse 9 gelagert.

Die Friktionsschiene 11 ist mittels einer schallisolierenden Schicht 16 an dem Grundkörper 15 des anzutreibenden Elements 12 befestigt. Das ermöglicht es, die Funktion des Friktionskontaktes des Ultraschallmotors zu verbessern. Die schallisolierende Schicht 16 ist hierbei eine Schicht aus einem viskosen organischen Kleber. Ebenso kann für die schallisolierende Schicht ein mit harten Teilchen anorganischen Materials gefüllter viskoser organischer Kleber verwendet werden. Zudem ist denkbar, dass die schallisolierende Schicht 16 Gummi, Silikon oder Polyurethan aufweist und vorzugsweise daraus besteht.

Der Ultraschallaktor 2 besitzt Generatoren 17 zur Erzeugung einer akustischen Stehwelle in ihm, wobei die Generatoren die Elektroden 18 und 19 umfassen.

Die piezoelektrische Keramik des Piezoelementes 3 ist normal zu den Elektroden 18 und 19 polarisiert, dargestellt durch die Vektoren p. Die Polarisationsachse P, die parallel zu den Vektoren p verläuft, kennzeichnet als deren Repräsentant die Polarisationsrichtung des Ultraschallaktors.

Die Schallisolationselemente 20 entkoppeln das Federelement 13 vom Ultraschallaktor 2.

Darstellung 21 von Fig. 1 zeigt eine weitere Ausführungsform eines Ultraschallmotors mit erfindungsgemäßem Ultraschallaktor, an welchem zwei Friktionselemente 8 an gegenüberliegenden Seitenflächen des Ultraschallaktors 2 angeordnet sind, und in entsprechender Weise zweianzutreibende Elemente 12 vorgesehen sind. Das Federelement 13 liegt hierbei als Klammer vor, welche beide anzutreibenden Elemente 12 umgreift und gegen die Friktionselemente 8 drückt.

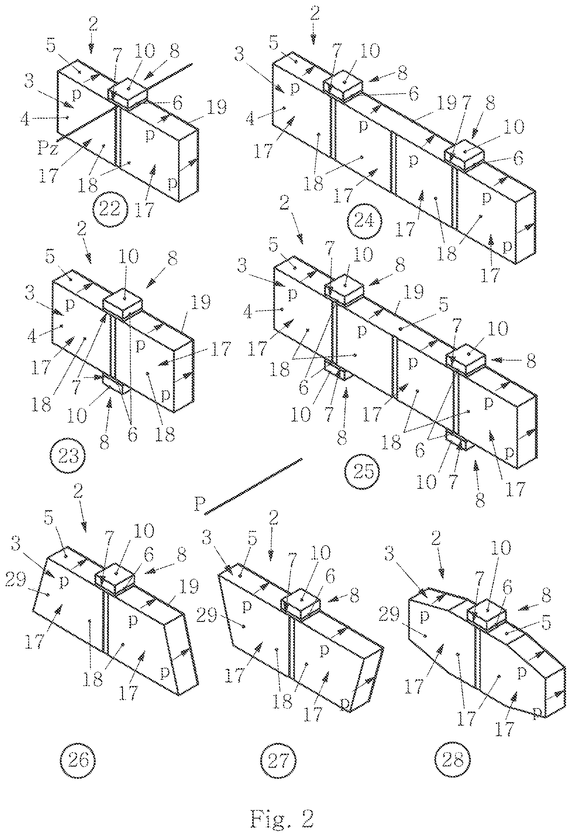

Die Darstellungen 22 bis 25 von Fig. 2 zeigen erfindungsgemäße Ultraschallaktoren 2 in Form rechteckiger Platten 4, während in den Darstellungen 26 bis 28 Ultraschallaktoren 2 in Form spitzwinkliger Platten gezeigt sind. Bei den Darstellungen 22 und 23 handelt es sich um Ultraschallaktoren mit jeweils zwei Generatoren 15, während die Ultraschallaktoren der Darstellungen 24 und 25 vier Generatoren aufweisen. Der Ultraschallaktor gemäß Darstellung 22 besitzt nur ein an der langen Seitenfläche bzw. Arbeitsfläche 5 angeordnetes Friktionselement 8, und der Ultraschallaktor gemäß Darstellung 23 besitzt zwei an den gegenüberliegenden langen Seitenflächen bzw. Arbeitsflächen 5 angeordnete Friktionselemente. Der Ultraschallaktor nach Darstellung 24 besitzt zwei Friktionselemente, welche an der gleichen langen Seitenfläche bzw. Arbeitsfläche 5 angeordnet sind, während der Ultraschallaktor nach Darstellung 25 insgesamt vier Friktionselemente 8 aufweist, wovon zwei an einer langen Seitenfläche bzw. Arbeitsfläche 5 und zwei an der entsprechend gegenüberliegenden langen Seitenfläche bzw. Arbeitsfläche 5 angeordnet sind.

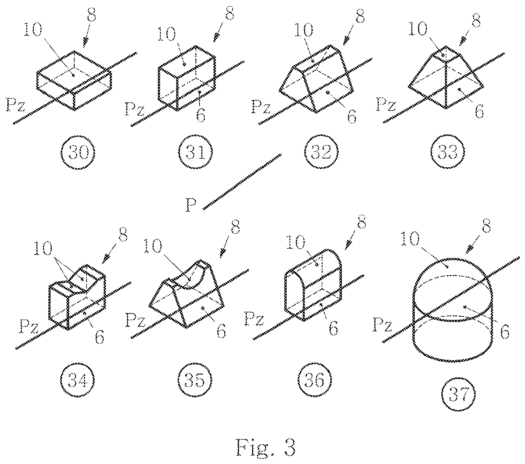

Die Darstellungen 30 bis 37 von Fig. 3 zeigen mögliche Ausführungsformen von Friktionselementen 8 eines erfindungsgemäßen Ultraschallaktors. Während die Friktionselemente gemäß den Darstellungen 30 bis 34 die Form von Prismen mit ebenen Friktionsflächen 10 besitzen, weisen die Friktionselemente nach den Darstellungen 35 und 36 zylindrische Friktionsflächen 10 auf. Darstellung 37 von Fig. 3 zeigt ein Friktionselement mit einer kugelförmigen Friktionsfläche 10.

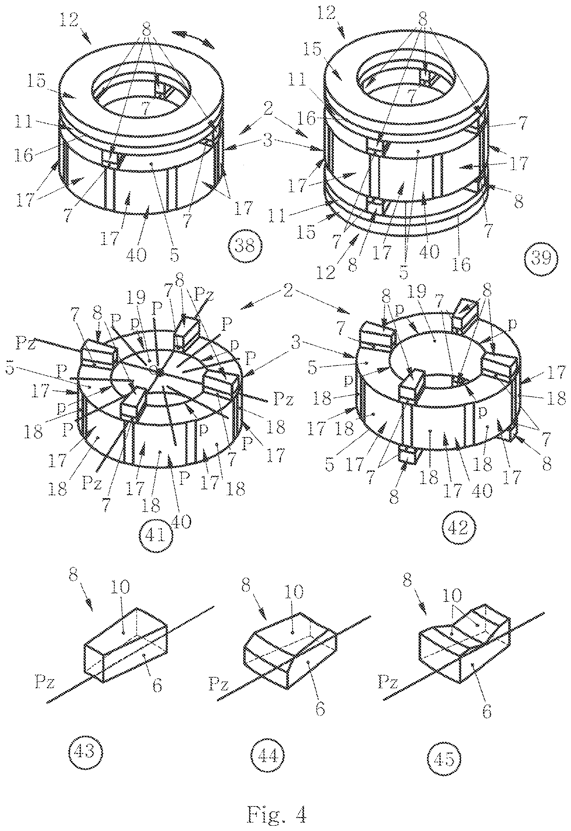

Die Darstellungen 38 und 39 von Fig. 4 zeigen weitere Ausführungsformen eines Ultraschallmotors, wobei das Piezoelement 3 des Ultraschallaktors 2 eine hohlzylindrische Form aufweist, und die an dem Ultraschallaktor angeordneten Friktionselemente 8 jeweils einen Ringabschnitt darstellen.

Der Ultraschallmotor gemäß Darstellung 38 besitzt ein anzutreibendes Element 12 in Ringform, während der Ultraschallmotor nach Darstellung39 zwei gegenüberliegend angeordnete anzutreibende Elemente 12 in Ringform aufweist. Die anzutreibenden Elemente sind hierbei mit Friktionsschienen 11 versehen.

Die Darstellungen 41 und 42 zeigen als Einzelheit die Ultraschallaktoren 2 der Ultraschallmotoren gemäß den Darstellungen 39 und 40. Hierbei sind die Ultraschallaktoren 2 radial polarisiert, so dass eine Vielzahl radial verlaufender und sich im Mittelpunkt O treffender Polarisationsachsen P vorhanden sind (siehe Darstellung 41 von Fig. 4).

Jedes Friktionselement 8 ist auf der Arbeitsoberfläche 5 des Ultraschallaktors symmetrisch bezüglich einer der Polarisationsachsen P angeordnet, die für dieses Friktionselement die zentrale Polarisationsachse P_{z} darstellt. Die Darstellungen 43 bis 45 von Fig. 4 zeigen die Anordnung der Friktionselemente 8 in Bezug zu ihren zentralen Polarisationsachsen P_{z}.

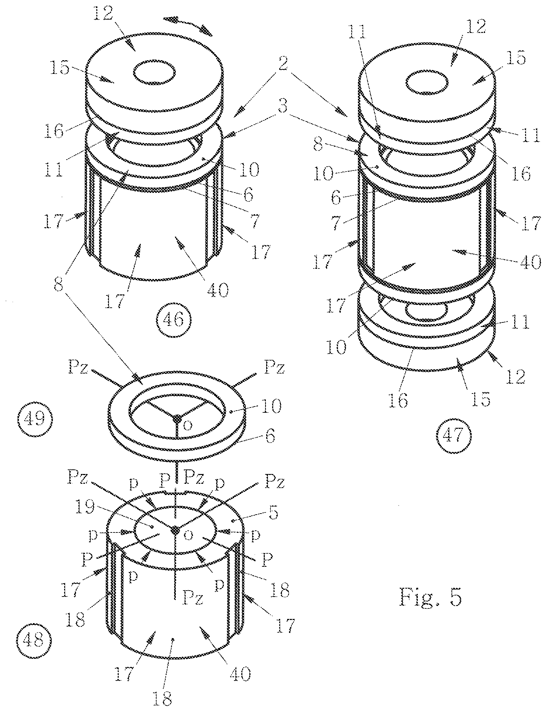

Die Darstellungen 46 und 47 von Fig. 5 zeigen weitere Ausführungsformen von Ultraschallmotoren, bei denen die Ultraschallaktoren eine hohlzylindrische Form aufweisen und die Friktionselemente 8 ringförmig sind. Die Darstellungen 48 und 49 von Fig. 5 zeigen als Einzelheit des Ultraschallmotors gemäß Darstellung 46 den Ultraschallaktor und das Friktionselement. Dabei verdeutlichen die Darstellungen 48 und 49 die gegenseitige Lage der Polarisationsachsen P bzw. P_{z} von Ultraschallaktor und Friktionselement.

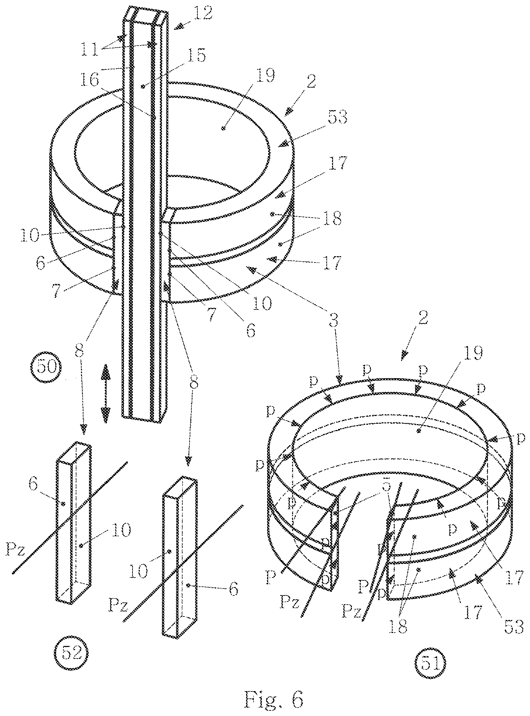

Darstellung 50 von Fig. 6 zeigt eine weitere Ausführungsform eines Ultraschallmotors mit einem im Wesentlichen hohlzylindrischen Ultraschallaktor, bei welchem ein Teil parallel zu Längsachse des Hohlzylinders ausgeschnitten ist. In der entsprechenden Lücke des Hohlzylinders ist das anzutreibende Element 12 eingesetzt.

Die Darstellungen 51 und 52 von Fig. 6 zeigen als Einzelheiten des Ultraschallmotors von Darstellung 50 den Ultraschallaktor 2 bzw. die an diesem angeordneten Friktionselemente 8. Zudem verdeutlichen die Darstellungen 51 und 52 die gegenseitige Lage der Polarisationsachsen P bzw. P_{z} von Ultraschallaktor und Friktionselementen.

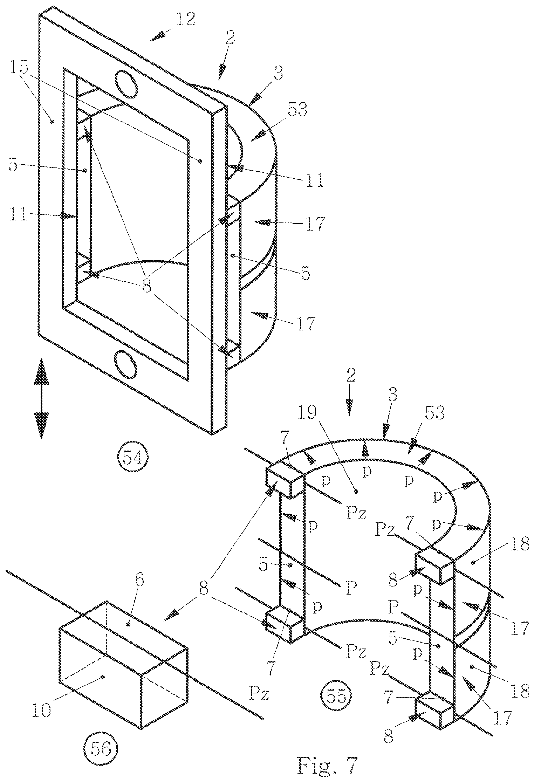

Fig. 7 zeigt in Darstellung 54 eine weitere Ausführungsform eines Ultraschallmotors, bei welchem der Ultraschallaktor ebenfalls ein Teilhohlzylinder ist, wobei an den entsprechenden, quer zur Umfangsrichtung orientierten Stirnflächen jeweils zwei Friktionselemente 8 angeordnet sind.

Die Darstellungen 55 und 56 von Fig. 7 zeigen als Einzelheiten des Ultraschallmotors von Darstellung 54 den Ultraschallaktor 2 bzw. die an diesem angeordneten Friktionselemente 8. Zudem verdeutlichen die Darstellungen 55 und 56 die gegenseitige Lage der Polarisationsachsen P bzw. P_{z} von Ultraschallaktor und Friktionselementen.

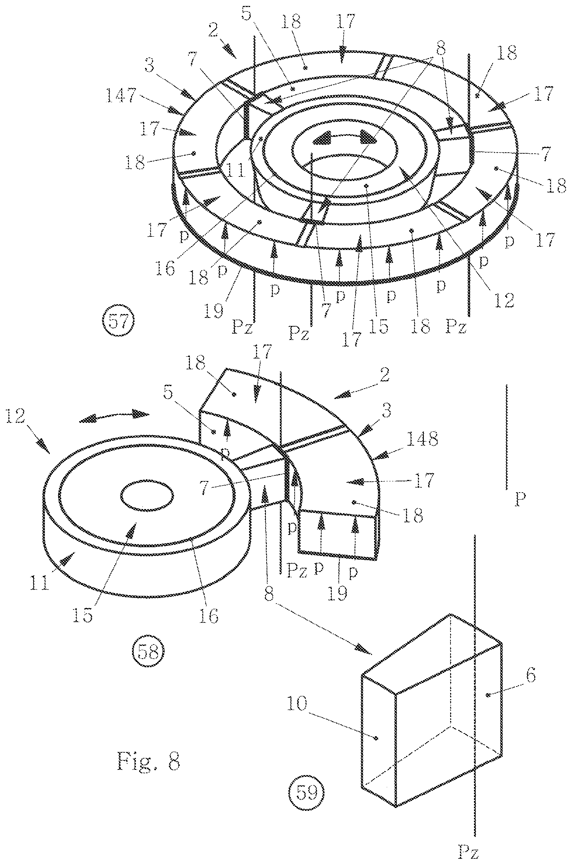

Die Darstellungen 57 und 58 von Fig. 8 zeigen weitere Ausführungsformen von Ultraschallmotoren, bei denen der Ultraschallaktor die Form eines Ringes (Darstellung 57) bzw. die Form eines Teilringes (Darstellung 58) aufweist. Darstellung 59 von Fig. 8 zeigt als Einzelheit aus den Darstellungen 57 und 58 das entsprechende Friktionselement 8 und verdeutlicht daran die Lage der Polarisationsachse P_{z}.

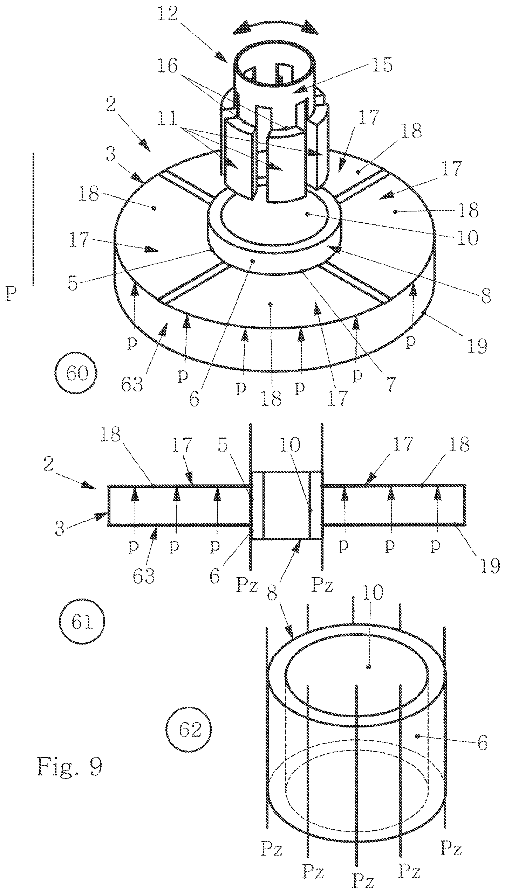

Der Ultraschallmotor gemäß Darstellung 60 von Fig. 9 besitzt einen Ultraschallaktor in Form einer dünnen Scheibe 63, während das Friktionselement 8 dieses Motors als dünnwandiger Hohlzylinder ausgeführt und in der zentralen Öffnung des Ultraschallaktors angeordnet ist.

Darstellung 61 von Fig. 9 zeigt als Einzelheit des Ultraschallmotors gemäß Darstellung 60 von Fig. 9 den Ultraschallaktor in Seitenansicht, während Darstellung 62 von Fig. 9 das Friktionselement 8 als Einzelheit des Ultraschallmotors gemäß Darstellung 60 zeigt.

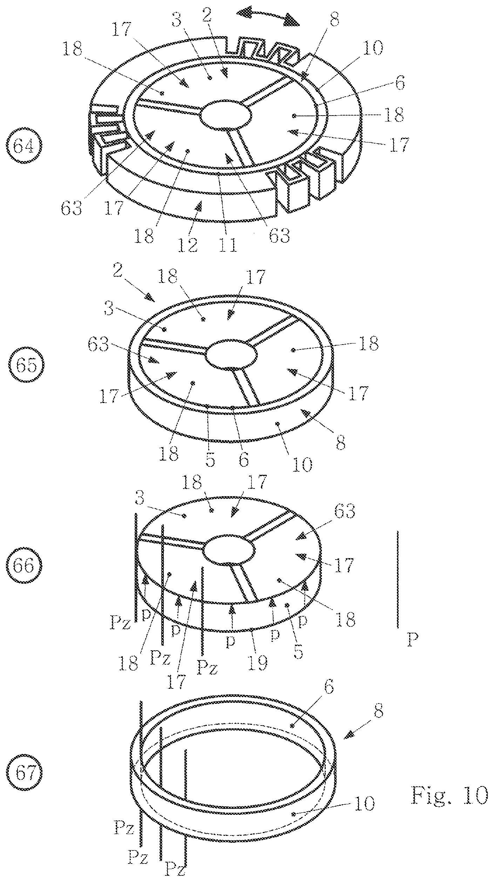

Der Ultraschallmotor gemäß Darstellung 64 von Fig. 10 hat einen scheibenförmigen Ultraschallaktor 2, der außen von einem Friktionselement in Form eines Rings umschlossen ist. Darstellung 65 von Fig. 10 zeigt als Einzelheit der Darstellung 64 den Ultraschallaktor samt dem diesen umgebenden Friktionselement. Die Darstellungen 66 und 67 zeigen als Einzelheiten den Ultraschallaktor (Darstellung 66) und das Friktionselement (Darstellung 67) des Ultraschallmotors gemäß Darstellung 64, wobei die gegenseitige Lage der Polarisationsachsen P und P_{z} verdeutlicht ist.

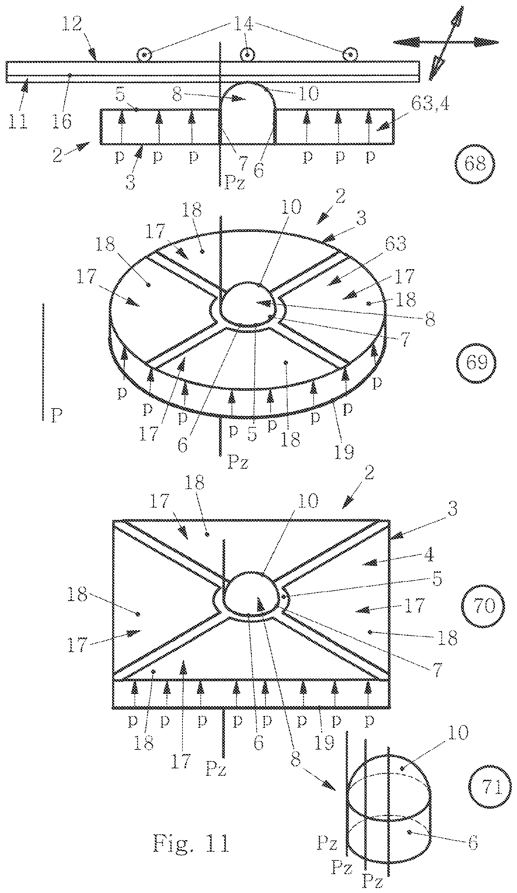

Beim Ultraschallmotor nach Darstellung 68 von Fig. 11 sitzt ein zylindrisches Friktionselement in einer zentralen Öffnung des Ultraschallmotors. Darstellung 69 von Fig. 11 zeigt als Einzelheit den scheibenförmigen Ultraschallaktor des Ultraschallmotors gemäß Darstellung 68. Darstellung 70 von Fig. 11 zeigt eine alternative Form des Ultraschallaktors für einen Ultraschallmotor gemäß Darstellung 68 von Fig. 11 in Form einer dünnen rechteckigen Platte. Darstellung 71 von Fig. 11 verdeutlicht als Einzelheit das Friktionselement der Ultraschallaktoren gemäß den Darstellungen 68 bis 70.

Der Ultraschallmotor gemäß Darstellung 68 von Fig. 11 arbeitet mit der Summe zweier akustischer Stehwellen mit der Grund- und der gedoppelten Frequenz.

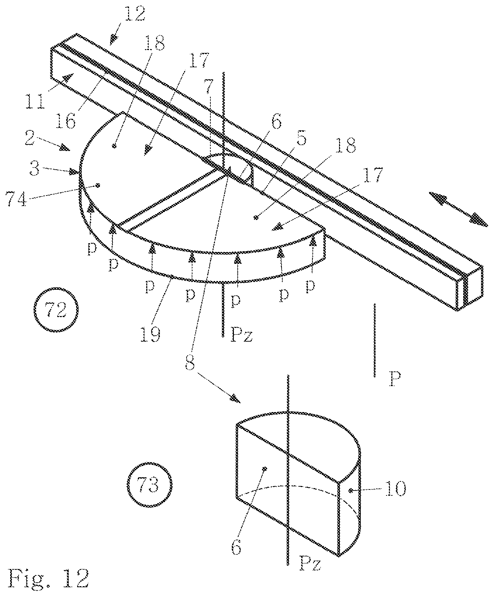

Der Ultraschallaktor des Ultraschallmotors gemäß Darstellung 72 von Fig. 12 ist als Teil einer Scheibe ausgeführt, während das Friktionselement des Ultraschallaktors einen Teilzylinder darstellt, der in Darstellung 73 von Fig. 12 als Einzelheit gezeigt ist.

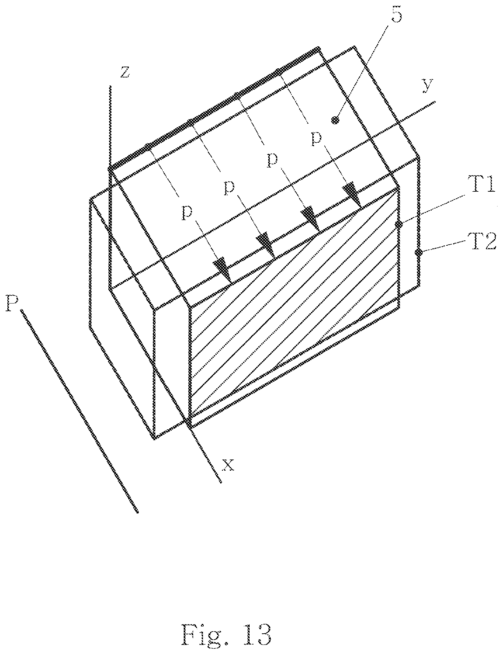

Fig. 13 zeigt einen aus piezoelektrischer Keramik hergestellten Ultraschallaktor in Quaderform. Die bei dem erfindungsgemäßen Ultraschallaktor eingesetzte und polarisierte Piezokeramik, beispielsweise Blei-Zirkonat-Titanat (PZT), hat bezüglich des Temperaturausdehnungskoeffizienten ein anisotropes Materialverhalten mit einem Temperaturausdehnungskoeffizienten *α*_{∥}parallel zur Polarisationsachse P, und einem sich hiervon unterscheidenden Temperaturausdehnungskoeffizienten *α*_{⊥} senkrecht zur Polarisationsachse P, wobei *α*_{∥} kleiner als *α*_{⊥} ist. Der Temperaturausdehnungskoeffizient *α*_{∥} liegt in einem Bereich von -3 bis 5x10e-6 1/K, während der Temperaturausdehnungskoeffizient *α*_{⊥} in einem Bereich von 3 bis 7x10e-6 1/K liegt.

Der Ultraschallaktor gemäß Fig. 13 ist so angeordnet, dass seine Kanten mit den Koordinatenachsen x, y und z zusammenfallen. Er weist die Elektroden 18 und 19 auf und ist normal zu diesen Elektroden polarisiert. Die Vektoren p geben die mit der Achse x zusammenfallende Polarisationsachse P des Ultraschallaktors an. Das bedeutet, dass die

Die durchgezogenen Linien in Fig. 13 repräsentieren die äußeren Abmessungen des Ultraschallaktors bei einer Temperatur T1, während die gestrichelten Linien dessen äußere Abmessungen bei der höheren Temperatur T2 darstellen.

Aufgrund der Unterschiede zwischen den Temperaturausdehnungskoeffizienten *α*_{∥} und *α*_{⊥} dehnt sich der Ultraschallaktor bei Erwärmung parallel zur Polarisationsachse P weniger aus als in zur Polarisationsachse P senkrechter Richtung. Bei einer stark ausgeprägten anisotropen Piezokeramik kann bei Erwärmung der Ultraschallaktor parallel zur Polarisationsachse P sogar zusammengepresst werden.

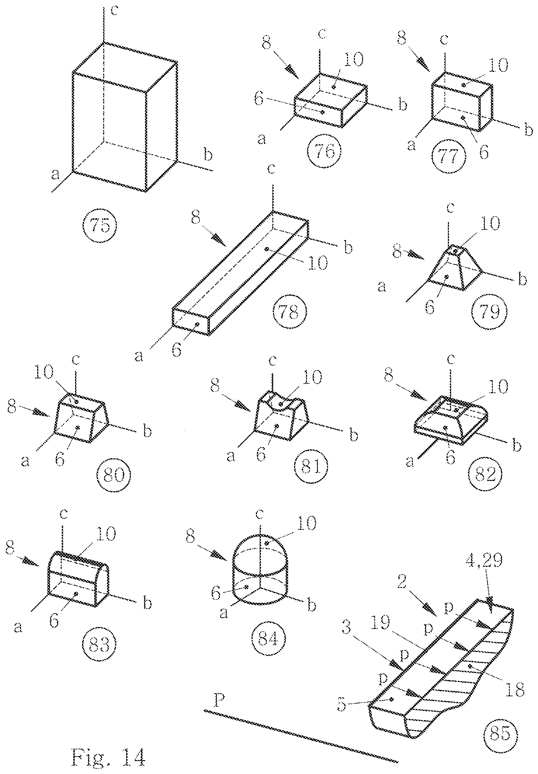

Darstellung 75 von Fig. 14 zeigt die Elementarzelle eines Monokristalls mit rhombischer Kristallform sowie die Anordnung seiner Kristallachsen a, b und c, während die Darstellungen 76 bis 84 von Fig. 14 unterschiedliche Ausführungsformen eines Friktionselementes bestehend aus monokristallinem Yttriumaluminat (YAlO₃) zeigen. Yttriumaluminat besitzt eine rhombische Kristallform.

Entlang bzw. parallel zu der bzw. den drei Kristallachsen a, b und c existieren unterschiedliche Temperaturausdehnungskoeffizienten *αₐ, α_{b}* und *α_{c}* Der Temperaturausdehnungskoeffizient *αₐ* entlang Kristallachse a beträgt 9,5x10e-6 1/K; der Temperaturausdehnungskoeffizient *α_{b}* entlang Kristallachse b beträgt 4,3x10e-6 1/K, und der Temperaturausdehnungskoeffizient *α_{c}* entlang Kristallachse c beträgt 10,8x10e-6 1/K. Auf der Mohs-Skala beträgt die Härte dieses Monokristalls 8,5.

Für Yttriumaluminat existiert entlang Achse b der geringste Temperaturausdehnungskoeffizient, während entlang Achse c der höchste Temperaturausdehnungskoeffizient vorliegt. Entlang Achse a existiert ein zwischen diesen beiden liegender Temperaturausdehnungskoeffizient. Für ein anderes Monokristall mit rhombischer Kristallstruktur kann eine andere als die zuvor beschriebene Verteilung bezüglich der Temperaturausdehnungskoeffizienten vorliegen.

Die Darstellungen 76 bis 84 in Fig. 14 zeigen unterschiedliche Ausführungsformen von aus Yttriumaluminat bestehenden Friktionselementen 8. Jeweils dargestellt ist ihre Orientierung in Bezug zu den Kristallachsen a, b, c und die Anordnung in Bezug zur Polarisationsachse P einer piezoelektrischen Platte 4 oder 29 gemäß Darstellung 85.

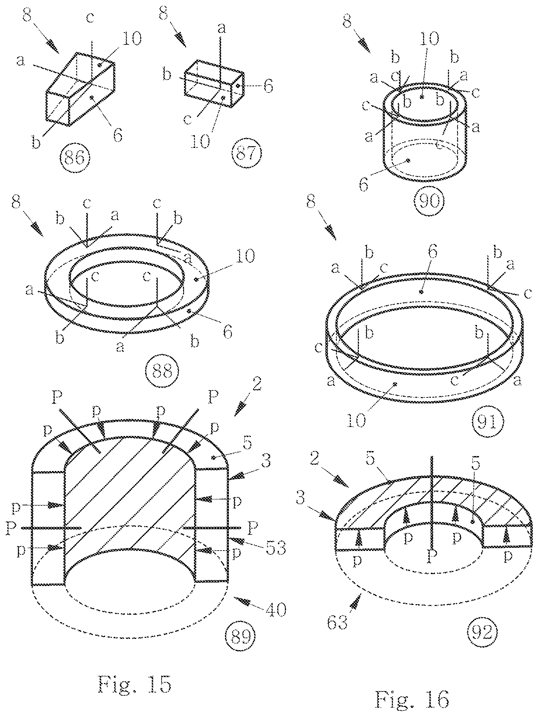

Die Darstellungen 86 bis 88 von Fig. 15 zeigen ein Friktionselement aus Yttriumaluminat in Form eines Ringabschnitts (Darstellung 86), eines Prismas (Darstellung 87) und eines Rings (Darstellung 88) für einen Ultraschallaktor in Form eines Teilhohlzylinders gemäß Darstellung 89 von Fig. 15.

Die Darstellungen 90 und 91 von Fig. 16 zeigen ein Friktionselement aus Yttriumaluminat in Form eines Zylinders (Darstellung 90) bzw. eines Rings (Darstellung 91) für einen Ultraschallaktor in Form einer Scheibe gemäß Darstellung 92 von Fig. 16.

Die in den Darstellungen 88 von Fig. 15 und 90 und 91 von Fig. 16 gezeigten ringförmigen oder zylindrischen Friktionselemente 8 haben ein sich drehendes System von Kristallachsen. Solche Friktionselemente können aus einer mit entsprechenden Keimen geimpften Schmelze von Yttriumaluminat gezogenen monokristallinen Rohren gefertigt werden.

Neben Yttriumaluminat kann das Friktionselement 8 auch aus einem anderen harten monokristallinen Material mit rhombischer Kristallstruktur bestehen. Hierunter fallen beispielsweise die Materialien Chrysoberyll (BeAl₂O₄) oder Topas Al₂SiO₄(F,OH)₂ mit einer Härte von 9 und höher auf der Mohs-Skala.

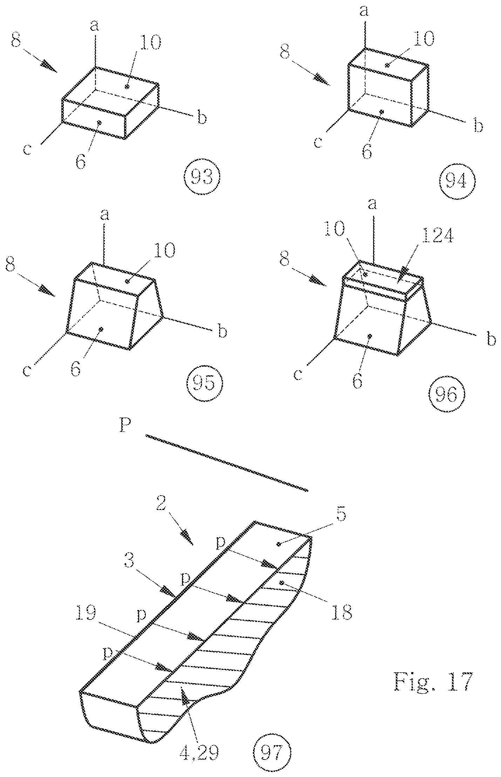

Die Darstellungen 93 bis 96 von Fig. 17 zeigen aus monokristallinem Lithiumtriborat (LiB₃O₅) mit ebenfalls rhombischer Kristallstruktur bestehende und unterschiedlich ausgeführte Friktionselemente. Lithiumtriborat hat eine stark ausgeprägte Anisotropie des Temperaturausdehnungskoeffizienten mit *αₐ* =10,8x10e-6 1/K, *α_{b}* =-8,8x10e-6 1/K und *α_{c},* =3,4x10e-6 1/K.

Das Friktionselement 8 wird so aus dem monokristallinen Lithiumtriborat herausgearbeitet, dass die Kristallachse b parallel zur Polarisationsachse P des Piezoelementes 3 des Ultraschallaktors 2 verläuft. Weiterhin liegt die Kristallachse c senkrecht zur Polarisationsachse P, während die Achse a senkrecht zur Oberfläche 3 verläuft, an der das Friktionselement angeordnet ist (siehe Darstellung 97 in Fig. 17).

Das monokristalline Lithiumtriborat besitzt eine Härte, die auf der Mohs-Skala den Wert 6 hat. Bei Anwendungsfällen, bei denen diese Härte nicht ausreichend ist, kann das Friktionselement an seiner Oberfläche zusätzlich mit einer dünnen, harten und abriebfesten Schicht 124 (siehe Darstellung 96 von Fig. 17) versehen sein.

Die aus Monokristallen mit rhombischer Kristallstruktur bestehenden bzw. hergestellten Friktionselemente 8 sind so mit der Arbeitsfläche 5 des Ultraschallaktors 3 verbunden, dass die Kristallachse mit minimalem Temperaturausdehnungskoeffizienten (für Yttriumaluminat ist dies die Kristallachse b) parallel zur Polarisationsachse P bzw. P_{z} verläuft. Die Kristallachse mit maximalem Temperaturausdehnungskoeffizient (für Yttriumaluminat ist dies die Achse a) verläuft senkrecht zur Polarisationsachse P bzw. P_{z}.

Durch diese Art der Achsenorientierung ist es möglich, die bei der Abkühlung oder der Erwärmung des Ultraschallaktors 3 entstehenden mechanischen Spannungen in der Klebeschicht 7 parallel zur Polarisationsachse P deutlich zu verringern.

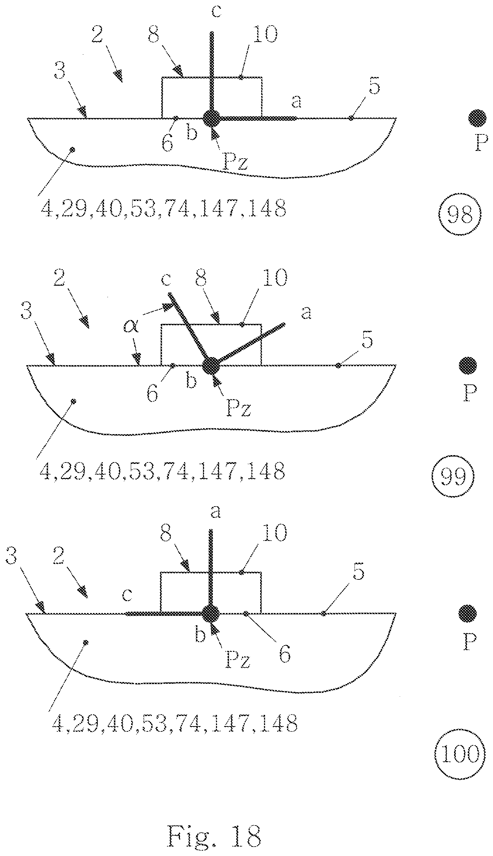

Die Achse des Temperaturausdehnungskoeffizienten mittlerer Größe (für Yttriumaluminat ist dies die Kristallachse c) kann entweder senkrecht zur Arbeitsfläche 5 (siehe Darstellung 98 in Fig. 18), oder geneigt unter dem Winkel *α* zur Arbeitsfläche 5 (siehe Darstellung 99 in Fig. 18) oder aber parallel zur Arbeitsfläche 5 (siehe Darstellung 100 in Fig. 18) des Ultraschallaktors 3 verlaufen. Der Neigungswinkel dieser Achse bestimmt die Größe der minimalen mechanischen Spannungen, die bei der Erwärmung und der Abkühlung des Ultraschallaktors 3 in der Klebeschicht 7 senkrecht zur Polarisationsachse P entstehen.

Beim erfindungsgemäßen Ultraschallaktor kann das an diesem angeordnete Friktionselement auch aus einem monokristallinen Material mit hexagonaler Kristallstruktur bestehen. Beispiele hierfür sind die Materialien Korund, Rubin, Saphir (Al₂O₃) oder Siliziumkarbid (SiC) mit einer Härte von 9 auf der Mohs-Skala.

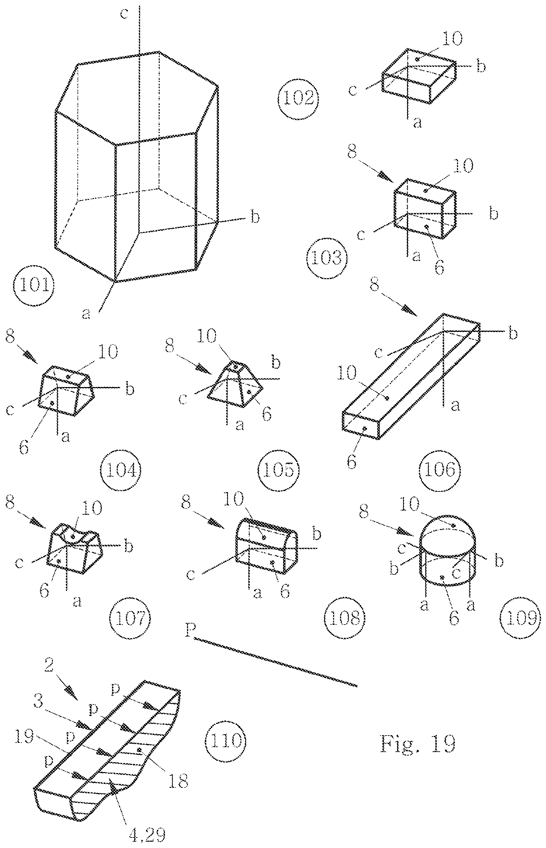

Darstellung 101 von Fig. 19 zeigt den Aufbau einer Elementarzelle eines monokristallinen Materials mit hexagonaler Kristallstruktur und die Anordnung seiner Kristallachsen a, b, c. Die Achsen a und b verlaufen unter einem Winkel von 120° zueinander, und unter einem Winkel von 90° zur Achse c.

Monokristalline Materialien mit hexagonaler Kristallstruktur sind durch zwei Temperaturausdehnungskoeffizienten charakterisiert. Ein Temperaturausdehnungskoeffizient, nämlich α_{ll,c} verläuft parallel zur Kristallachse c. Der zweite Temperaturausdehnungskoeffizient, *α*_{⊥,c} verläuft senkrecht zur Kristallachse c und parallel zu der durch die Kristallachsen a und b gebildeten Ebene.

Bei einem monokristallinen Material aus Korund, Rubin oder Saphir beträgt *α*_{ll,c} 6,2x10e-6 1/K, und *α*_{⊥,c} beträgt 5,4x10e-6 1/K, d.h. hier ist die Kristallachse c die Achse des Temperaturausdehnungskoeffizient mit maximaler Größe, während die durch die Kristallachsen a und b gebildete Ebene die Ebene für den Temperaturausdehnungskoeffizient mit minimaler Größe darstellt.

Die Darstellungen 102 bis 109 von Fig. 19 zeigen als Prismen ausgeführte und aus einem monokristallinen Material hexagonaler Kristallstruktur wie Korund, Rubin, oder Saphir hergestellte bzw. bestehende Friktionselemente 8, die jeweilige Lage bzw. Ausrichtung ihrer Kristallachsen a, b, und c und mit Bezug auf Darstellung 110 von Fig. 19 deren Ausrichtung zur Polarisationsachse P des Ultraschallaktors.

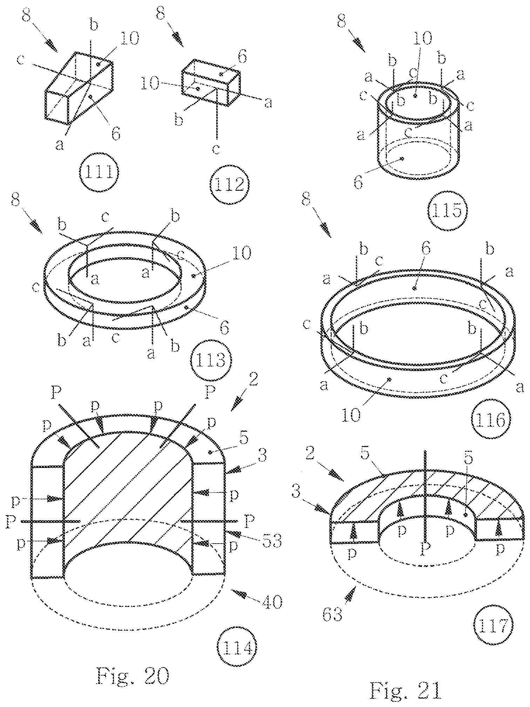

Die Darstellungen 111 bis 113 von Fig. 20 zeigen ein Friktionselement aus monokristallinem Korund, Rubin oder Saphir in Form eines Ringabschnitts (Darstellung 111), eines Prismas (Darstellung 112) und eines Rings (Darstellung 113) für einen Ultraschallaktor in Form eines Teilhohlzylinders gemäß Darstellung 114 von Fig. 20.

Die Darstellungen 115 und 116 von Fig. 21 zeigen ein Friktionselement aus monokristallinem Korund, Rubin oder Saphir in Form eines Zylinders (Darstellung 115) bzw. eines Rings (Darstellung 116) für einen Ultraschallaktor in Form einer Scheibe gemäß Darstellung 117 von Fig. 21.

Die aus einem Monokristall mit hexagonaler Kristallstruktur hergestellten Friktionselemente 8 sind so an der Arbeitsfläche 5 des Piezoelements 3 angeordnet, dass die Ebene des Temperaturausdehnungskoeffizienten mit minimaler Größe parallel zur Polarisationsachse P bzw. P_{z} und senkrecht zur Arbeitsfläche 5 des Ultraschallaktors 3 verläuft.

Bei dieser Kristallachsenausrichtung gelingt es, die bei der Abkühlung und der Erwärmung des Ultraschallaktors 3 entstehenden mechanischen Spannungen in der Klebeschicht 7 parallel und senkrecht zur Polarisationsachse P erheblich zu verringern.

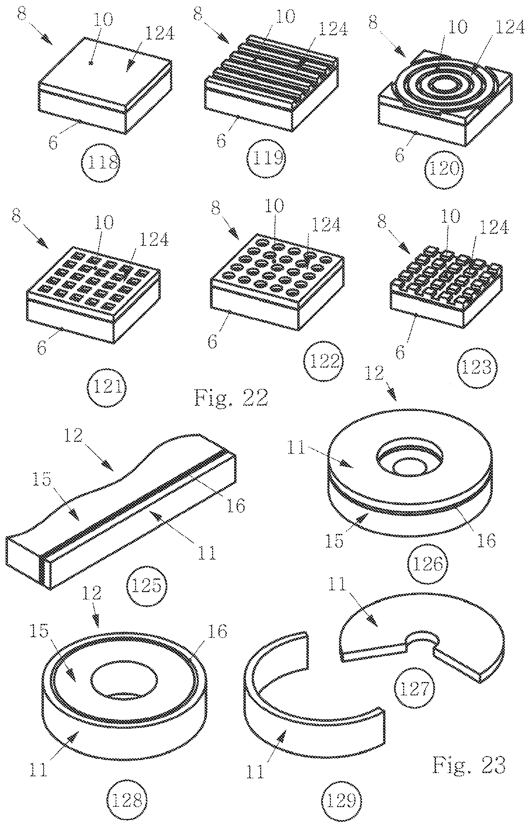

Die Darstellungen 118 bis 123 in Fig. 22 zeigen verschiedene Ausführungsformen von Friktionselementen 8, die mit einer dünnen abriebfesten Schicht 124 versehen sind.

Eine solche Schicht kann aus isotroper Keramik, Sitall, Glas oder mit harten Teilchen gefülltem Glas bestehen.

Die abriebfeste Schicht 124 des Friktionselementes 8 kann eine monolithische Struktur wie in Darstellung 118 von Fig. 22 gezeigt, oder in Form gerader (Darstellung 119) oder konzentrischer bzw. spiralförmiger Streifen (Darstellung 120) vorliegen, oder eine Netzstruktur (Darstellungen 121 und 122) oder eine Struktur als ein Feld von Punkten mit quadratischer oder anderer Form (Darstellung 123) aufweisen.

Gemäß den Darstellungen 125 bis 129 von Fig. 23 kann die Friktionsschiene 11 plattenförmig (Darstellung 125), scheibenförmig (Darstellungen 126 und 127) oder ringförmig (Darstellungen 128 und 129) sein.

Zur Verringerung des Abriebs ist die Friktionsschiene 11 aus einem Material gefertigt werden, dessen Härte ähnlich hoch ist wie die Härte des Friktionselementes 8 oder der Friktionsschicht 124. Als Material hierfür kann ein monokristallines Material mit kubischer Kristallstruktur wie z. B. ein Monokristall aus synthetischem Kohlenstoff, d.h. ein Monokristall eines synthetischen Diamanten, verwendet werden.

Außerdem kann die Friktionsschiene aus einem monokristallinen Material mit kubischer Kristallstruktur wie Zirkonoxid (ZrO₂) Spinell (MgAl₂O₄), Yttrium-Aluminium-Granat (Y₃Al₅O₁₂) oder Bornitrid (*β*-BN) bestehen.

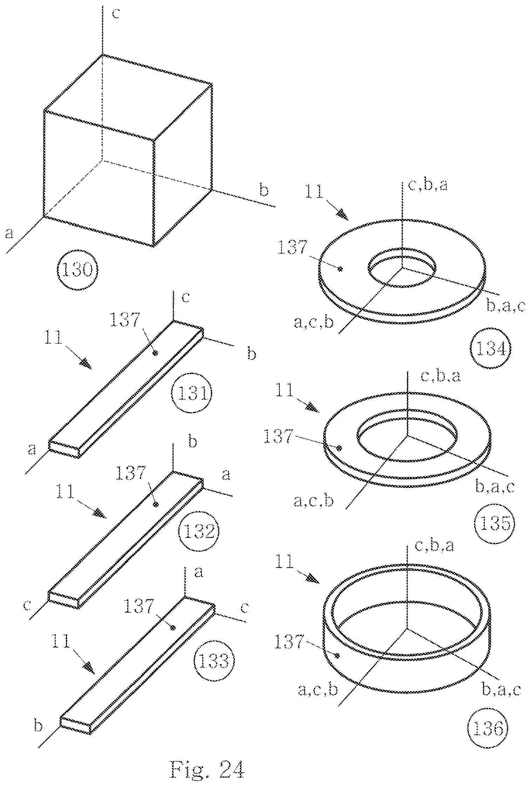

In Darstellung 130 von Fig. 24 ist die Elementarzelle eines monokristallinen Materials kubischer Kristallstruktur mit der Ausrichtung seiner Kristallachsen a, b, c gezeigt.

Die Darstellungen 131 bis 136 von Fig. 24 zeigen unterschiedliche Ausführungsformen von aus monokristallinem Material kubischer Kristallstruktur hergestellter Friktionsschienen 11 und deren mögliche Ausrichtung in Bezug zu den Kristallachsen.

Bei der Verwendung eines Monokristalls eines synthetischen Diamanten verläuft die Kristallachse c senkrecht zur Friktionsoberfläche 137 der Friktionsschiene 11 oder parallel zur Friktionsoberfläche 137 der Friktionsschiene 11.

Bei der Verwendung von Monokristallen kubischer Kristallstruktur wie Zirkonoxid (ZrO₂) Spinell (MgAl₂O₄). Yttrium-Aluminium-Granat (Y₃Al₅O₁₂) oder Bornitrid (*β*-BN) verläuft die Kristallachse a oder die Kristallachse b oder die Kristallachse c des Monokristalls senkrecht zur Friktionsoberfläche 137 der Friktionsschiene 11.

Außerdem kann die Friktionsschiene 11 aus einem monokristallinen Material mit hexagonaler Kristallstruktur wie beispielsweise Korund, Rubin oder Saphir (Al₂O₃) bestehen.

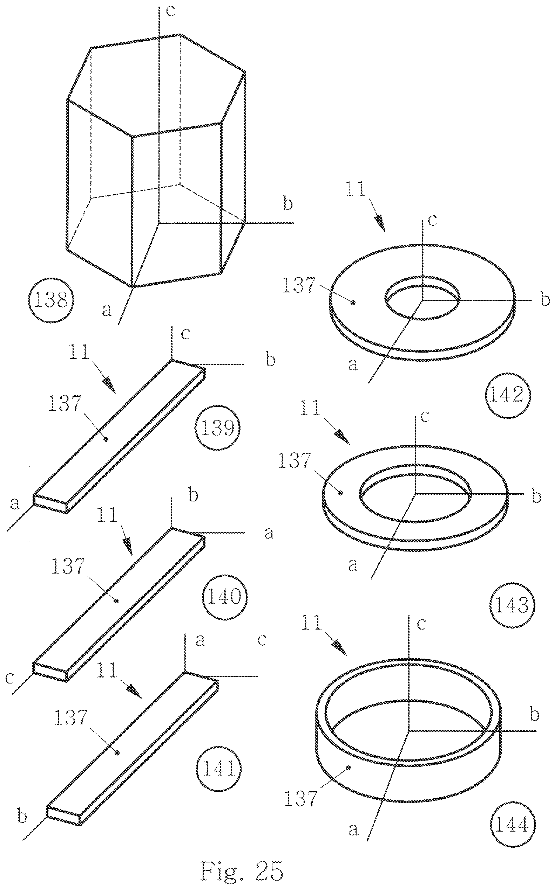

Darstellung 138 von Fig. 25 zeigt die Elementarzelle eines Monokristalls mit hexagonaler Kristallstruktur und die Ausrichtung seiner Kristallachsen a, b, c.

Die Darstellungen 139 bis 144 von Fig. 25 zeigen verschiedene Ausführungsvarianten von aus Monokristallen mit hexagonaler Kristallstruktur hergestellter Friktionsschienen 11 und ihre mögliche Ausrichtung zu den Kristallachsen a, b, c des Monokristalls mit hexagonaler Kristallstruktur.

Die Friktionsschiene 11 kann zudem aus Oxidkeramik aufweisend 75 bis 95 Gew.-% Aluminiumoxid (Al₂O₃) und 25 bis 5 Gew.-% Zirkoniumoxid (ZrO₂) bestehen.

Die Friktionsschiene 11 kann ebenso aus SiAlON-Keramik, aufweisend 40 bis 90 Gew.-% Siliziumnitrid (Si₃N₄) und 60 bis 10 Gew.-% Aluminiumoxid (Al₂O₃) bestehen.

Darüber hinaus kann die Friktionsschiene 11 eine Keramik wie etwa Siliziumkarbid (SiC) oder Aluminiumnitrid (AIN) aufweisen oder daraus bestehen. Weiterhin kann die Friktionsschiene eine Metallkeramik wie Wolframkarbid (WC) oder eine Mischung aus Wolframkarbid (WC) und Titankarbid (TiC) aufweisen oder daraus bestehen.

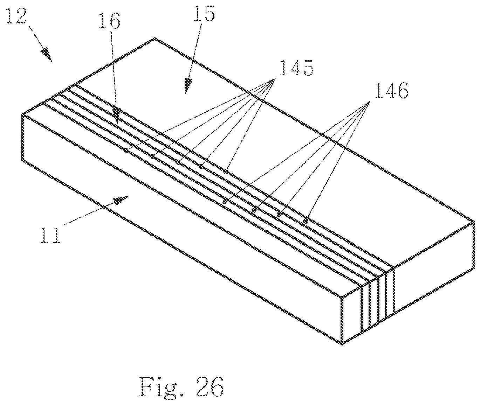

Fig. 26 zeigt ein anzutreibendes Element 12, bei dem die schallisolierende Schicht 16 aus sich abwechselnden viskosen Schichten 145 und zähen Schichten 146 gebildet ist.

Durch den erfindungsgemäßen Ultraschallaktor gelingt eine optimierte Anpassung seiner Temperaturausdehnungskoeffizienten an die des an ihm angeordneten Friktionselements. Dadurch werden die aufgrund des Verklebens des Friktionselementes mit dem Ultraschallaktor innerhalb der Klebeschicht entstehenden mechanischen Anfangsspannungen wesentlich reduziert.

Die Reduzierung der mechanischen Anfangsspannungen erlaubt einen Betrieb des Ultraschallmotors bei deutlich höherer mechanischer Last.

Die Angleichung der Temperaturausdehnungskoeffizienten von Ultraschallmotor und des an ihm angeordneten Friktionselements ermöglicht zudem eine deutliche Erhöhung der Aushärtetemperatur des zum Verbinden des Friktionselementes mit dem Piezoelements verwendeten Klebers. So sind Aushärtetemperaturen von bis zu 250°C realisierbar.

Aufgrund der erhöhten Aushärtetemperaturen liegt auch die maximale Arbeitstemperatur des Ultraschallmotors im Betrieb mit maximaler mechanischer Last höher, während gleichzeitig die minimale Arbeitstemperatur tiefer liegt. Somit ergibt sich insgesamt ein deutlich erweiterter Einsatztemperaturbereich für den Ultraschallaktor bzw. für einen Ultraschallmotor mit solch einem Ultraschallaktor.

Die zuvor beschriebene Verringerung der mechanischen Anfangsspannungen ermöglicht es darüber hinaus, die maximale Schwingungsgeschwindigkeit des Ultraschallaktors zu erhöhen und dadurch die maximale Geschwindigkeit des anzutreibenden Elements des Ultraschallmotors zu erhöhen. Ferner erhöht sich die durch den Ultraschallaktor und den Ultraschallmotor entwickelte maximale Kraft.

Schließlich erhöht sich auf Grund der Verringerung der mechanischen Anfangsspannungen die Betriebssicherheit des Ultraschallaktors bzw. des entsprechenden Ultraschallmotors.

## Patentansprüche

1. Ultraschallaktor aus piezoelektrischer Keramik mit einer Polarisationsachse P, wobei der Ultraschallaktor (2) einen Temperaturausdehnungskoeffizienten *α*_{∥} parallel zur Polarisationsachse P aufweist, der sich von einem Temperaturausdehnungskoeffizienten *α*_{⊥} senkrecht zur Polarisationsachse P unterscheidet, und an dem Ultraschallaktor (2) wenigstens ein Friktionselement (8) angeordnet ist, **dadurch gekennzeichnet, dass** das Friktionselement (8) aus einem anisotropen Monokristall mit entlang der drei Kristallachsen a, b, und c unterschiedlichen Temperaturausdehnungskoeffizienten besteht, wobei der Temperaturausdehnungskoeffizient entlang einer ersten der drei Kristallachsen am geringsten und der Temperaturausdehnungskoeffizient entlang einer zweiten der drei Kristallachsen am größten ist, und das Friktionselement (8) in Bezug auf den Ultraschallaktor (2) so ausgerichtet ist, dass die erste Kristallachse parallel zur Polarisationsachse P des Ultraschallaktors angeordnet und die zweite Kristallachse senkrecht zur Polarisationsachse P des Ultraschallaktors angeordnet ist.

2. Ultraschallaktor nach Anspruch 1, **dadurch gekennzeichnet, dass** das Monokristall des Friktionselements (8) eine rhombische Kristallstruktur aufweist und vorzugsweise aus Yttriumaluminat (YAlO₃), Chrysoberyll (BeAl₂O₄) oder Topas Al₂SiO₄(F,OH)₂ besteht.

3. Ultraschallaktor nach Anspruch 1 oder 2, **dadurch gekennzeichnet, dass** die Kristallachse b des Friktionselements (8) parallel zur Polarisationsachse P des Ultraschallaktors, und die Kristallachse c des Friktionselements (8) senkrecht zur Oberfläche des Ultraschallaktors, an der das Friktionselement angeordnet ist, ausgerichtet ist.

4. Ultraschallaktor nach Anspruch 1, **dadurch gekennzeichnet, dass** das Friktionselement (8) aus Lithiumtriborat (LiB₃O₅) besteht.

5. Ultraschallaktor nach Anspruch 4, **dadurch gekennzeichnet, dass** die Kristallachse b des Friktionselements (8) parallel zur Polarisationsachse P des Ultraschallaktors (2) und die Kristallachse c des Friktionselements senkrecht zur Polarisationsachse P des Ultraschallaktors ausgerichtet ist, während die Kristallachse a senkrecht zur Oberfläche des Ultraschallaktors, an der das Friktionselement angeordnet ist, ausgerichtet ist.

6. Ultraschallaktor nach Anspruch 1, **dadurch gekennzeichnet, dass** das Monokristall des Friktionselements (8) eine hexagonale Kristallstruktur aufweist und vorzugsweise aus Korund, Rubin, Saphir (Al₂O₃) oder Siliziumkarbid (SiC), besteht.

7. Ultraschallaktor nach Anspruch 6, **dadurch gekennzeichnet, dass** die Kristallachse c des Friktionselements (8) senkrecht zur Polarisationsachse P des Ultraschallaktors (2) und die aus den zwei anderen Kristallachsen a und b gebildete Ebene senkrecht zur Oberfläche des Ultraschallaktors, an welcher das Friktionselement angeordnet ist, ausgerichtet ist.

8. Ultraschallaktor nach einem der vorangegangenen Ansprüche, **dadurch gekennzeichnet, dass** das Friktionselement (8) mit einer dünnen harten abriebfesten Außenschicht (124), vorzugsweise bestehend aus isotroper Keramik, Sitall, Glas oder mit harten Metallteilchen gefülltem Glas, versehen ist.

9. Ultraschallaktor nach Anspruch 8, **dadurch gekennzeichnet, dass** die abriebfeste Außenschicht (124) des Friktionselementes (8) eine monolithische Struktur oder eine Struktur in Form gerader oder konzentrischer oder spiralförmiger Streifen oder eine Netzstruktur oder eine Struktur in Form eines Feldes von Punkten quadratischer oder anderer Form aufweist.

10. Ultraschallaktor nach einem der vorangegangenen Ansprüche, **dadurch gekennzeichnet, dass** das Friktionselement (8) mittels eines organischen Klebers oder eines Niedrigtemperaturglases mit dem Ultraschallaktor (2) verbunden ist.

11. Ultraschallmotor mit einem Ultraschallaktor (2) nach einem der vorangegangenen Ansprüche und einem durch den Ultraschallaktor anzutreibenden Element.

12. Ultraschallmotor nach Anspruch 11, **dadurch gekennzeichnet, dass** das anzutreibende Element (12) eine Friktionsschiene (11) aufweist, mit welcher das Friktionselement (8) des Ultraschallaktors (2) in Wirkverbindung steht.

13. Ultraschallmotor nach Anspruch 12, **dadurch gekennzeichnet, dass** die Friktionsschiene (11) aus einem synthetischen Monokristall aus Kohlenstoff kubischer Kristallstruktur besteht, wobei die Kristallachse c des Monokristalls senkrecht oder parallel zur Oberfläche der Friktionsschiene (11) angeordnet ist.

14. Ultraschallmotor nach Anspruch 12, **dadurch gekennzeichnet dass** die Friktionsschiene (11) aus einem Kohlenstoffmonokristall kubischer Kristallstruktur, vorzugsweise aus Zirkonoxid (ZrO₂) Spinell (MgAl₂O₄), Yttrium-Aluminium-Granat (Y₃Al₅O₁₂) oder Bornitrid (*β*-BN) besteht, wobei die Kristallachse a oder die Kristallachse b oder die Kristallachse c des Monokristalls senkrecht zur Oberfläche der Friktionsschiene (11) ausgerichtet ist.

15. Ultraschallmotor nach Anspruch 12, **dadurch gekennzeichnet, dass** die Friktionsschiene (11) aus einem Monokristall hexagonaler Kristallstruktur, vorzugsweise aus Korund, Rubin oder Saphir (Al₂O₃), besteht, wobei die Kristallachse c des Monokristalls senkrecht oder parallel zur Oberfläche der Friktionsschiene (11) ausgerichtet ist.

## Claims

1. An ultrasonic actuator made of piezoelectric ceramic with a polarisation axis P, wherein the ultrasonic actuator (2) has a temperature expansion coefficient *α*_{∥} parallel to polarisation axis P, which differs from a temperature expansion coefficient *α*_{⊥} normal to polarisation axis P, and wherein at least one friction element (8) is disposed on the ultrasonic actuator (2), **characterised in that** the friction element (8) is made of an anisotropic monocrystal with different temperature expansion coefficients along the three crystal axes a, b and c, wherein the temperature expansion coefficient is least along a first of the three crystal axes and the temperature expansion coefficient is greatest along a second of the three crystal axes, and wherein the friction element (8) is orientated with respect to the ultrasonic actuator (2) in such a way that the first crystal axis is disposed parallel to polarisation axis P of the ultrasonic actuator and the second crystal axis is disposed normal to polarisation axis P of the ultrasonic actuator.

2. The ultrasonic actuator according to claim 1, **characterised in that** the monocrystal of the friction element (8) has a rhombic crystalline structure and is preferably made of yttrium aluminate (YAlO3), chrysoberyl (BeAl2O4) or topaz Al2SiO4(F,OH)2.

3. The ultrasonic actuator according to claim 1 or 2, **characterised in that** crystal axis b of the friction element (8) is orientated parallel to polarisation axis P of the ultrasonic actuator, and crystal axis c of the friction element (8) is orientated normal to the surface of the ultrasonic actuator on which the friction element is disposed.

4. The ultrasonic actuator according to claim 1, **characterised in that** the friction element (8) is made of lithium triborate (LiB₃O₅).

5. The ultrasonic actuator according to claim 4, **characterised in that** crystal axis b of the friction element (8) is orientated parallel to polarisation axis P of the ultrasonic actuator (2) and crystal axis c of the friction element is orientated normal to polarisation axis P of the ultrasonic actuator, whilst crystal axis a is orientated normal to the surface of the ultrasonic actuator on which the friction element is disposed.

6. The ultrasonic actuator according to claim 1, **characterised in that** the monocrystal of the friction element (8) has a hexagonal crystalline structure and is preferably made of corundum, ruby, sapphire (Al₂O₃) or silicon carbide (SiC).

7. The ultrasonic actuator according to claim 6, **characterised in that** crystal axis c of the friction element (8) is orientated normal to polarisation axis P of the ultrasonic actuator (2) and the plane formed by the two other crystal axes a and b is orientated normal to the surface of the ultrasonic actuator on which the friction element is disposed.

8. The ultrasonic actuator according to any one of the preceding claims, **characterised in that** the friction element (8) is provided with a thin hard abrasion-resistant external layer (124), preferably made of isotropic ceramic, sitall, glass or glass filled with hard metal particles.

9. The ultrasonic actuator according to claim 8, **characterised in that** the abrasion-resistant external layer (124) of the friction element (8) has a monolithic structure or a structure in the form of straight or concentric or helical strips or a network structure or a structure in the form of a field of dots with a square or other shape.

10. The ultrasonic actuator according to any one of the preceding claims, **characterised in that** the friction element (8) is connected to the ultrasonic actuator (2) by means of an organic adhesive or a low-temperature glass.

11. An ultrasonic motor with an ultrasonic actuator (2) according to any one of the preceding claims and an element to be driven by the ultrasonic actuator.

12. The ultrasonic motor according to claim 11, **characterised in that** the element (12) to be driven comprises a friction rail (11), with which the friction element (8) of the ultrasonic actuator (2) is in an operative connection.

13. The ultrasonic motor according to claim 12, **characterised in that** the friction rail (11) is made of a synthetic monocrystal of carbon of cubic crystalline structure, wherein crystal axis c of the monocrystal is disposed normal or parallel to the surface of the friction rail (11).

14. The ultrasonic motor according to claim 12, **characterised in that** the friction rail (11) is made of a carbon monocrystal of cubic crystalline structure, preferably comprising zirconium oxide (ZrO₂) spinell (MgAl₂O₄), yttrium aluminium granate (Y₃Al₅O₁₂) or boron nitride (*β*-BN), wherein crystal axis a or crystal axis b or crystal axis c of the monocrystal is orientated normal to the surface of the friction rail (11).

15. The ultrasonic motor according to claim 12, **characterised in that** the friction rail (11) is made of a monocrystal of hexagonal crystalline structure, preferably comprising corundum, ruby or sapphire (Al₂O₃), wherein crystal axis c of the monocrystal is orientated normal or parallel to the surface of the friction rail (11).

## Revendications

1. Actionneur à ultrasons en céramique piézoélectrique avec un axe de polarisation P, l'actionneur à ultrasons (2) comportant un coefficient de dilatation thermique α_{∥} parallèle à l'axe de polarisation P, qui se différencie d'un coefficient de dilatation thermique *α*_{⊥} perpendiculaire à l'axe de polarisation P et un élément de frottement (8) étant disposé sur l'actionneur à ultrasons (2), **caractérisé en ce que** l'élément de frottement (8) est composé d'un monocristal anisotrope avec des coefficients de dilatation thermique différents le long des trois axes du cristal a, b et c, le coefficient de dilatation thermique étant le plus faible le long d'un premier des trois axes du cristal et le coefficient de dilatation thermique étant le plus grand le long d'un deuxième des trois axes du cristal et l'élément de frottement (8) étant orienté par rapport à l'actionneur à ultrasons (2) de telle manière que le premier axe du cristal est disposé parallèle à l'axe de polarisation P de l'actionneur à ultrasons et le deuxième axe du cristal étant disposé perpendiculaire à l'axe de polarisation P de l'actionneur à ultrasons.

2. Actionneur à ultrasons selon la revendication 1, **caractérisé en ce que** le monocristal de l'élément de frottement (8) comporte une structure cristalline rhombique et est de préférence composé d'aluminate d'yttrium (YAIO₃), de chrysobéryl (BeAl₂O₄) ou de topaze Al₂SiO₄(F,OH)₂.

3. Actionneur à ultrasons selon la revendication 1 ou 2, **caractérisé en ce que** l'axe du cristal b de l'élément de frottement (8) est orienté parallèle à l'axe de polarisation P de l'actionneur à ultrasons et l'axe du cristal c de l'élément de frottement (8) perpendiculaire à la surface de l'actionneur à ultrasons sur laquelle l'élément de frottement est disposé.

4. Actionneur à ultrasons selon la revendication 1, **caractérisé en ce que** l'élément de frottement (8) est en triborate de lithium (LiB₃O₅).

5. Actionneur à ultrasons selon la revendication 4, **caractérisé en ce que** l'axe du cristal b de l'élément de frottement (8) est orienté parallèle à l'axe de polarisation P de l'actionneur à ultrasons (2) et l'axe du cristal c de l'élément de frottement perpendiculaire à l'axe de polarisation P de l'actionneur à ultrasons, alors que l'axe du cristal a est orienté perpendiculaire à la surface de l'actionneur à ultrasons sur laquelle l'élément de frottement est disposé.

6. Actionneur à ultrasons selon la revendication 1, **caractérisé en ce que** le monocristal de l'élément de frottement (8) comporte une structure cristalline hexagonale et est composé de préférence de corindon, de rubis, de saphir (Al₂O₃) ou de carbure de silicium (SiC).

7. Actionneur à ultrasons selon la revendication 6, **caractérisé en ce que** l'axe du cristal c de l'élément de frottement (8) est orienté perpendiculaire à l'axe de polarisation P de l'actionneur à ultrasons (2) et le plan formé par les deux autres axes du cristal a et b est orienté perpendiculaire à la surface de l'actionneur à ultrasons sur laquelle l'élément de frottement est disposé.

8. Actionneur à ultrasons selon l'une quelconque des revendications précédentes, **caractérisé en ce que** l'élément de frottement (8) est doté d'une couche extérieure (124) fine dure résistante à l'abrasion, de préférence composée de céramique isotrope, de Sitall, de verre ou de verre rempli de particules métalliques dures.

9. Actionneur à ultrasons selon la revendication 8, **caractérisé en ce que** la couche extérieure (124) résistante à l'abrasion de l'élément de frottement (8) comporte une structure monolithique ou une structure sous la forme de bandes droites ou concentriques ou en forme de spirale ou une structure réticulaire ou une structure sous la forme d'un champ de points de forme quadratique ou autre.

10. Actionneur à ultrasons selon l'une quelconque des revendications précédentes, **caractérisé en ce que** l'élément de frottement (8) est relié à l'actionneur à ultrasons (2) au moyen d'un adhésif organique ou d'un verre à basse température.

11. Moteur à ultrasons avec un actionneur à ultrasons (2) selon l'une quelconque des revendications précédentes et un élément à entraîner par l'actionneur à ultrasons.

12. Moteur à ultrasons selon la revendication 11, **caractérisé en ce que** l'élément à entraîner (12) comporte un rail de frottement (11) avec lequel l'élément de frottement (8) de l'actionneur à ultrasons (2) est en liaison fonctionnelle.

13. Moteur à ultrasons selon la revendication 12, **caractérisé en ce que** le rail de frottement (11) est composé d'un monocristal synthétique de carbone de structure cristalline cubique, l'axe du cristal c du monocristal étant disposé perpendiculaire ou parallèle à la surface du rail de frottement (11).

14. Actionneur à ultrasons selon la revendication 12, **caractérisé en ce que** le rail de frottement (11) est composé d'un monocristal de carbone de structure cristalline cubique, de préférence d'oxyde de zirconium (ZrO₂), de spinelle (MgAl₂O₄), de grenat d' yttrium et d'aluminium (Y₃Al₅O₁₂) ou de nitrure de bore (β-BN), l'axe du cristal a ou l'axe du cristal b ou l'axe du cristal c du monocristal étant orienté perpendiculaire à la surface du rail de frottement (11).

15. Moteur à ultrasons selon la revendication 12, **caractérisé en ce que** le rail de frottement (11) est composé d'un monocristal de structure cristalline hexagonale, de préférence de corindon, de rubis ou de saphir (A₁₂O₃), l'axe du cristal c du monocristal étant orienté perpendiculaire ou parallèle à la surface du rail de frottement (11).
